# EUROPÄISCHE PATENTSCHRIFT

(11) **EP 1 895 290 B1**
(45) Veröffentlichungstag und Bekanntmachung des Hinweises auf die Patenterteilung: **24.06.2009**
(21) Anmeldenummer: 06018052.8
(22) Anmeldetag: 30.08.2006
(51) Int. Cl.: G01N 22/00

(54) **Mikrowellenmessvorrichtung zur Bestimmung mindestens einer Messgrösse an einem Produkt**
Microwave measuring device for determining at least one measured value on a product
Dispositif à micro-ondes destiné à déterminer au moins une grandeur de mesure sur un produit

(43) Veröffentlichungstag der Anmeldung: 05.03.2008
(73) Patentinhaber: AMS- Advanced Microwave Systems GmbH, 22761 Hamburg (DE)
(72) Erfinder: Knöchel, Reinhard, 25336 Elmshorn (DE); Taute, Wolfgang, 24235 Labeo (DE); Döscher, Claas, 20253 Hamburg (DE)
(74) Vertreter: Müller Verweyen

(56) Entgegenhaltungen:
- DE-A1- 4 004 119
- DE-A1- 19 705 260
- JP-A- 59 190 641
- US-A1- 3 286 208
- MIZIER M O: "MESURES D'HUMIDITE: POURQUOI PAS LES HYPERFREQUENCES?" MESURES REGULATION AUTOMATISME, CFE. PARIS, FR, Bd. 50, Nr. 1, Januar 1985 (1985-01), Seiten 67-70, XP002057631 ISSN: 0755-219X

## Beschreibung

Die Erfindung betrifft eine Mikrowellenmessvorrichtung zur Bestimmung mindestens einer Messgröße an einem Produkt mittels eines in einem Resonator erzeugten resonanten elektrischen Mikrowellenfeldes.

Eine bekannte Messvorrichtung umfasst einen kreiszylindrischen Hohlraumresonator mit einem Mikrowellenfeld vom E₀₁₀-Feldtyp, wobei die Probe entlang der Zylinderachse durch den Resonator geführt wird. Bei derartigen Sensoren ist die Feldenergie in einem zentralen Bereich des Resonators konzentriert. In diesem Bereich ist die Massebelastbarkeit des Resonators begrenzt, weil eine zu hohe Massebelastung zu erheblichen Frequenzverwerfungen führen kann.

Bekannt sind auch offenen Resonatoren, die zur Bildung eines Spalts zur Materialzuführung zweckmäßigerweise entlang einer Kontur getrennt sind, über die näherungsweise keine Wandströme fließen (R. Knöchel, "Mikrowellenmessverfahren: Messprinzipien und Applikatorformen", in: K. Kupfer, "Materialfeuchtemessung", expert-Verlag 1997, S. 146). Der Resonator ist durch den Spalt in zwei Resonatorhälften getrennt. Bei einer zu hohen Massebelastung kann die Kopplung des Mikrowellenfeldes über den Spalt hinweg beeinträchtigt sein oder sogar zusammenbrechen, was die Mikrowellenmessung gefährdet.

Um eine schwächere Ankopplung des Probendielektrikums zu erreichen und somit die Massebelastbarkeit des Resonators zu erhöhen, ist aus EP 1 564 548 A1 ein Mikrowellensensor mit einem Resonatorhohlraum bekannt, in dem sich eine Mehrzahl von Halbwellen des elektrischen Feldes ausbreiten, wodurch die Feldenergie über ein größeres Volumen verteilt wird. Aufgrund der Mehrzahl von Halbwellen des elektrischen Feldes weist dieser Mikrowellensensor jedoch eine erhöhte Baugröße auf.

US 3 286 208 offenbart eine Mikrowellenvorrichtung zur Erzeugung hoher Mikrowellenleistungsdichten mit einem resonanten Ringwellenleiter, in den zwei mit Parabolschalen versehene Antennen geschaltet sind, so dass zwischen den Parabolschalen ein Wechselwirkungsbereich gebildet ist. Die Mikrowellenvorrichtung dient dazu, die Eignung von in den Wechselwirkungsbereich eingebrachten, der Mikrowellenstrahlung ausgesetzten Prüfkörpern gegenüber hohen Mikrowellenleistungsdichten zu prüfen.

JP 59 190641 A offenbart eine Mikrowellenvorrichtung zur Bestimmung des Anteils von Alkohol in gemischtem Treibstoff mit einem zylindrischen Hohlraumresonator und zwei Koaxialkabeln zum Zuführen von Mikrowellen von einem Sender in den Hohlraumresonator und zum Ableiten von Mikrowellen aus dem Hohlraumresonator zu einem Detektor.

Die Aufgabe der vorliegenden Erfindung besteht darin, eine Mikrowellenmessvorrichtung bereitzustellen, bei der mit einfachen Mitteln eine vergleichsweise hohe Massebelastbarkeit des Resonators bei relativ geringer Baugröße erreicht wird.

Die Erfindung löst diese Aufgabe mit den Merkmalen des Anspruchs 1. Die Erfindung besteht darin, dass der Resonator teilweise von dem Resonatorhohlraum und teilweise von dem Resonatorkoaxialkabel gebildet wird. Ein Teil der Feldenergie des resonanten Mikrowellenfeldes ist daher in dem Resonatorkoaxialkabel gespeichert, wodurch die Ankopplung des Probendielektrikums an das Mikrowellenfeld abgeschwächt wird und eine höhere Massebelastbarkeit erreicht wird im Vergleich zu einer Messvorrichtung ohne Resonatorkoaxialkabel. Das Resonatorkoaxialkabel hat den Vorteil eines geringen Volumens und der Möglichkeit einer flexiblen Anordnung, wodurch die Baugröße des Applikators insgesamt reduziert werden kann.

Die Erfindung ist abgegrenzt gegenüber bekannten Messvorrichtungen, bei denen Koaxialkabel lediglich zum Zuleiten und Ableiten von Mikrowellen zu bzw. von einem Hohlraumresonator vorgesehen sind. In diesem Fall bilden sich in den Koaxialkabeln laufende Mikrowellen aus, jedoch kein stehendes resonantes Mikrowellenfeld; das stehende resonantes Mikrowellenfeld ist auf den Hohlraumresonator beschränkt. Im Gegensatz dazu breitet sich ein Teil des stehenden resonanten Mikrowellenfeldes erfindungsgemäß in dem Koaxialkabel aus; das Koaxialkabel bildet einen Teil des Resonators, es handelt sich somit um ein Resonatorkoaxialkabel. Die mikrowellenleitende Verbindung zwischen Resonatorhohlraum und Resonatorkoaxialkabel ermöglicht die Ausbildung eines einheitlichen gekoppelten Mikrowellenfeldes mit festem Phasenbezug über den von Resonatorhohlraum und Resonatorkoaxialkabel gebildeten Resonator. Es handelt sich als um einen einheitlichen Resonator, nicht etwa einen Koaxialkabel-Resonator und einen davon unabhängigen Hohlraumresonator.

Der Resonatorhohlraum ist ein von metallischen oder metallisierten Wänden feldbegrenzender Hohlraum in dem Mikrowellenapplikator. Der Mikrowellenapplikator ist ein fester Körper und dadurch insbesondere von einem flexiblen Koaxialkabel abgegrenzt.

Erfindungsgemäß bilden das Resonatorkoaxialkabel und Resonatorhohlraum einen Ringresonator, wodurch ein durchgehender Phasenbezug über das gesamte resonante Mikrowellenfeld unabhängig von der Ankopplung des Probendielektrikums sichergestellt ist. Hierdurch kann die Messgenauigkeit bzw. Langzeitstabilität verbessert werden. Ringresonator ist dabei nicht auf eine bestimmte Form beschränkt, insbesondere nicht auf eine Kreisform, sondern bezeichnet lediglich einen länglichen in sich geschlossenen Resonator. Länglich bedeutet, dass der Resonator entlang einer Längsachse, insbesondere der Ringachse, eine mindestens dreimal, vorzugsweise mindestens fünfmal so große Ausdehnung aufweist wie in einer Richtung senkrecht zu der Längsachse. Insbesondere bei einem ringförmigen Resonator breitet sich in dem Resonator vorzugsweise eine gerade Anzahl von Halbwellen des elektrischen Feldes, also ein ganze Anzahl von Wellenlängen aus.

Die Anzahl der in dem Resonator und in dem Resonatorkoäxialkabel ausgebildeten Halbwellen des elektrischen Feldes kann nach Bedarf gewählt werden. Je mehr Mikrowellenenergie in dem Resonatorkoaxialkabel gespeichert ist, desto höher ist die Massebelastbarkeit des Resonators. Vorzugsweise ist daher mindestens eine Halbwelle, weiter vorzugsweise sind mindestens drei Halbwellen, weiter vorzugsweise mindestens fünf Halbwellen des resonanten elektrischen Mikrowellenfeldes in dem Resonatorkoaxialkabel gebildet. Aus ähnlichen Gründen sind in dem aus Resonatorhohlraum und Resonatorkoaxialkabel gebildeten Resonator vorzugsweise mindestens vier Halbwellen, weiter vorzugsweise mindestens sechs Halbwellen, weiter vorzugsweise mindestens acht Halbwellen des elektrischen Mikrowellenfeldes gebildet. Halbwelle des elektrischen Feldes bedeutet, dass das elektrische Mikrowellenfeld ausgehend von einer Nullstelle des Feldes über ein Feldmaximum oder -minimum bis zur nächsten Nullstelle verläuft. Die Ausbildung mindestens zweier Halbwellen bedeutet, dass der Resonator in einer höheren Mode betrieben wird.

Die Erfindung betrifft einen Resonatorhohlraum, bei dem das Produkt zur Messung in den Resonatorraum eingeführt wird. Der Gegenstand der Anmeldung ist dadurch abgrenzbar gegenüber Streufeld-Resonatoren, bei denen das Produkt außerhalb des Resonatorraums angeordnet ist und die Messung mittels eines externen elektrischen Streufeldes erfolgt.

Vorzugsweise ist der Resonatorhohlraum zur Durchführung der Probe durch den Mikrowellenresonator eingerichtet, um die Messung an einem kontinuierlichen Produktstrom zu ermöglichen. Die Einführöffnung ist als Durchgangsöffnung durch den Mikrowellenresonator ausgebildet. Hier kommen aufgrund der häufig engen Platzverhältnisse die Vorzüge der Erfindung besonders zum Tragen. Die Erfindung ist aber nicht hierauf beschränkt. Auch Portionsmessvorrichtungen mit einer einseitig geöffneten Einführöffnung zum Ein- und Ausführen einer Produktportion beispielsweise in einem Probenbehälter sind umfasst.

Vorzugsweise ist die Probenzuführung in einem Bereich hoher Feldenergie um ein entsprechendes Intensitätsmaximum herum angeordnet, weil diese Feldbereiche eine hohe Feldhomogenität aufweisen. Ein Bereich hoher Feldenergie ist ein Bereich mit mindestens 50%, vorzugsweise mindestens 70%, weiter vorzugsweise mindestens 90% Feldintensität relativ zu der Intensität im Feldmaximum.

Die Erfindung betrifft die Bestimmung mindestens einer Messgröße an einem Produkt. Dies betrifft einerseits die Bestimmung einer dielektrischen Eigenschaft des Systems Produkt plus Wasser und davon abgeleiteten Größen, insbesondere der Feuchte und/oder der Dichte des Produkts. Andererseits kann auch das Vorhandensein einer erwünscht oder unerwünscht vorhandenen Fremdsubstanz nachgewiesen werden. Fremdsubstanz ist jede weitere Substanz in dem System Produkt plus Wasser.

Bevorzugte Anwendungen betreffen die Messung an strangförmigen oder in einem Strang geführten Produkten, insbesondere Faserstrangprodukten wie Tabakprodukte, insbesondere Tabakstrang, Zigaretten oder Filtertow, sowie Textilfaserprodukte, insbesondere Baumwollstrang, Fäden oder Garne, oder in einem Strang geführte Wirkstoffeinheiten, beispielsweise Tabletten. Der Resonator und die Produktöffnungen im Resonator sind daher vorzugsweise an diese Anwendungen angepasst. Umfasst ist auch die Messung an Schüttgütern.

Die Erfindung wird im folgenden anhand bevorzugter Ausführungsformen unter Bezugnahme auf die beigefügten Zeichnungen erläutert. Dabei zeigt:
- Fig. 1:: eine schematischen Darstellung einer Mikrowellenmessvorrichtung;
- Fig. 2:: eine perspektivische Ansicht eines zylindrischen Mikrowellenapplikators; und
- Fig. 3 bis 5:: schematische Darstellungen weiterer Mikrowellenmessvorrichtungen.

Die Messanordnung umfasst einen Applikator 10, der metallische Wände 11, 15, 16 zur Bildung eines Resonatorhohlraums 12 aufweist. Die metallischen Wände 11, 15, 16 können auch von einer Metallisierung, d.h. einer beispielsweise durch Aufdampfen erzeugten metallischen Beschichtung, auf einem Träger gebildet werden. In dem Applikator 10 sind eine erste Probendurchführungsöffnung 13 in einer ersten Stirnfläche 15 und eine zweite Probendurchführungsöffnung 14 in einer zweiten Stirnfläche 16 des Applikators 10 vorgesehen. Die Durchführungsöffnungen 13, 14 dienen zur Durchführung eines Produkts 36 durch den Resonatorhohlraum 12 in dem Applikator 10. Zur Führung des Produkts durch den Resonatorraum 12 und zum Schutz des Resonatorraums 12 vor Verschmutzungen und Produktablagerungen ist ein Führungsrohr 17 aus einem verlustarmen Dielektrikum vorgesehen.

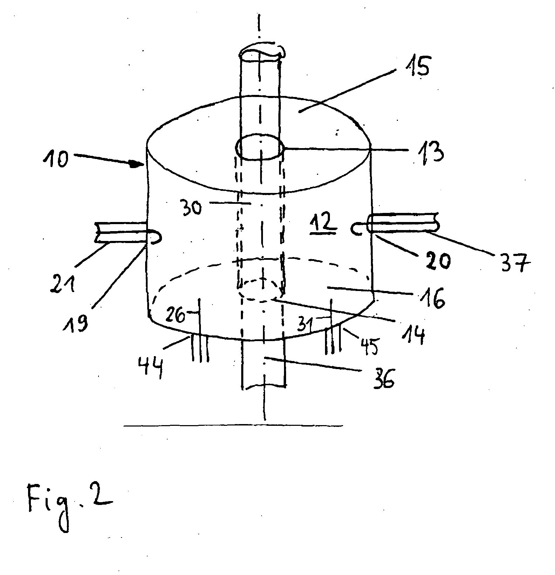

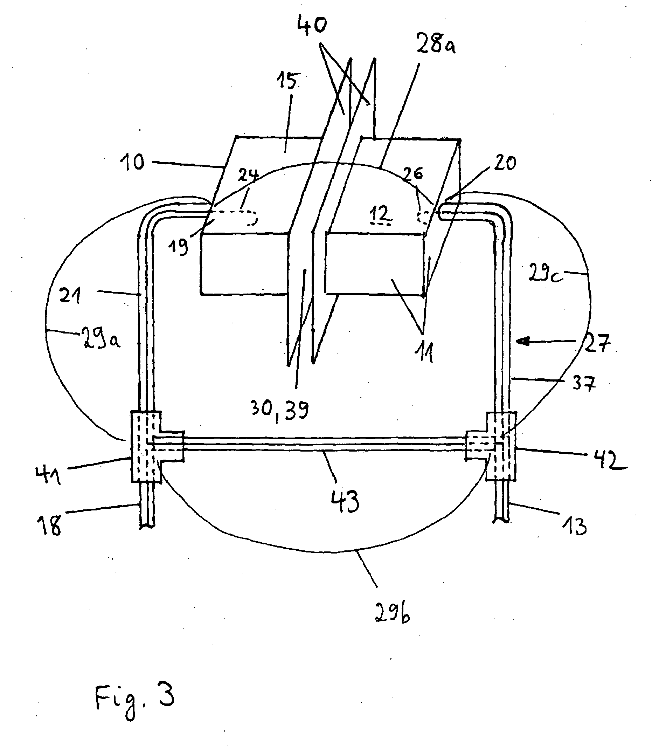

Der Resonatorhohlraum 12 kann zylindrisch, insbesondere kreiszylindrisch geformt sein. Eine solche Ausführungsform ist in Fig. 2 gezeigt. Die Erfindung ist aber hierauf nicht beschränkt. Insbesondere kann der Resonatorhohlraum 12 auch rechteckig bzw. quaderförmig sein, wie beispielsweise in Fig. 3 gezeigt.

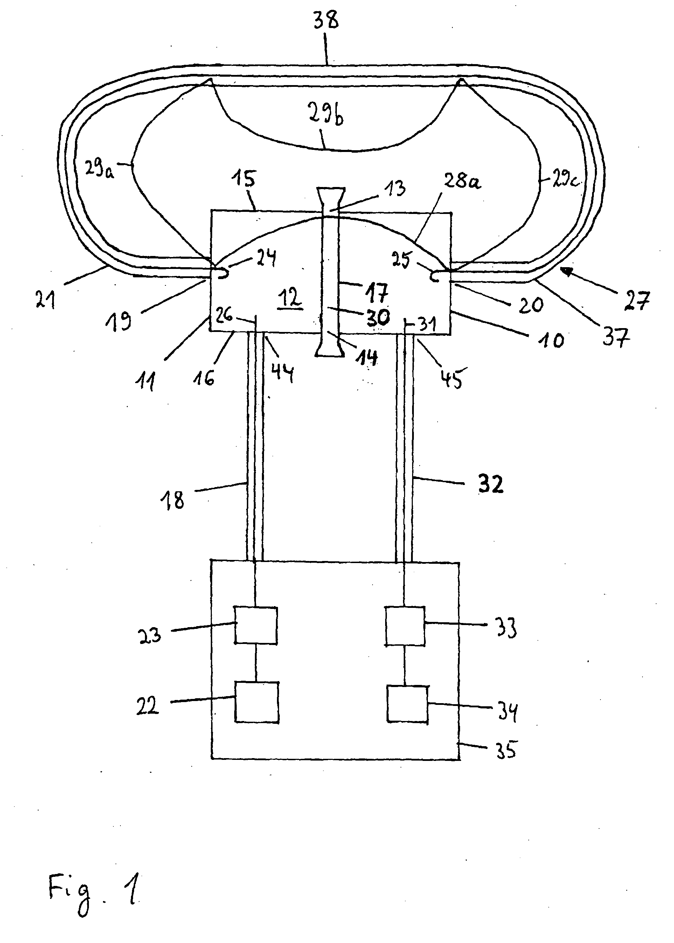

Der Applikator 10 weist zwei Mikrowellenanschlüsse 19, 20 mit Kopplungseinrichtungen 24, 25 auf. Mikrowellenleitende Koaxialkabel 21, 37 sind mit den Mikrowellenanschlüssen 19, 20 verbunden. Im Beispiel gemäß Fig. 1 werden die Koaxialkabel 21, 37 von einem einheitlichen Koaxialkabel 38 gebildet. Das Koaxialkabel 38 und der Hohlraum 12 bilden gemeinsam einen ringförmigen Mikrowellenresonator 27.

Mikrowellen werden mittels eines von einer Steuereinrichtung 22 gesteuerten Generators 23 erzeugt und mittels einer Koaxialleitung 18 über einen Anschluss 44 zu einer Koppeleinrichtung 26 geleitet, durch die das Mikrowellenfeld in den Hohlraum 12 eingekoppelt wird. Die Länge des Resonatorkoaxialkabels 38 und die von dem Generator 23 erzeugte Frequenz des Mikrowellenfeldes sind so abgestimmt, dass sich in dem Resonator 27 ein stehendes resonantes Mikrowellenfeld ausbildet. In der Regel ist die zur Messung verwendete Resonanz festgelegt.

Im Beispiel der Fig. 1 handelt es sich um einen geschirmten Resonatorhohlraum 12, der abgesehen von den Öffnungen 13, 14 für die Probendurchführung im wesentlichen geschlossen ist, wobei die Öffnungen zur Probenein- bzw. -durchführung in bzw. durch den Resonator den Feldverlauf kaum stören. In dem Resonatorhohlraum 12 bildet sich in diesem Beispiel eine Halbwelle 28a des elektrischen Mikrowellenfeldes aus. Im Falle eines kreiszylindrischen Resonatorhohlraums 12, wie in Fig. 2 gezeigt, kann der Feldverlauf in dem Resonatorhohlraum beispielsweise der E₀₁₀-Resonanz eines vollständig geschlossenen kreiszylindrischen Hohlraumresonators entsprechen. Im Falle eines rechteckigen Resonatorhohlraums 12 kann der Feldverlauf in dem Resonatorhohlraum beispielsweise der H₁₀₁-Resonanz eines vollständig geschlossenen rechteckigen Hohlraumresonators entsprechen. Entlang des Resonatorkoaxialkabels 38 breiten sich in dem in Fig. 1 gezeigten Beispiel drei Halbwellen 29a, 29b, 29c des elektrischen Feldes aus. Insgesamt bilden sich somit entlang dem Resonator 27 vier miteinander gekoppelte Halbwellen 28a, 29a-c des elektrischen Feldes aus. Da ein erheblicher Teil der Mikrowellenenergie in dem nicht belasteten Resonatorkoaxialkabel 38 gespeichert ist, ist die Kopplung der Probe an das Feld in dem Resonatorhohlraum 12 geringer als in einem Hohlraumresonator ohne Resonatorkoaxialkabel 38.

Das resonante Mikrowellenfeld wechselwirkt mit dem Produkt in der Wechselwirkungszone 30. Über die Koppeleinrichtung 31 und den Anschluss 45 wird ein durch die Wechselwirkung modifiziertes Mikrowellensignal aus dem Hohlraum 12 ausgekoppelt und mittels einer Koaxialleitung 32 einem Analysator 33 zugeführt, dessen Ausgangssignal von einer entsprechend programmierten Auswerteeinrichtung 34 verarbeitet wird. Generator 23, Analysator 33, Steuereinrichtung 22 und Auswerteeinrichtung 34 können in einer Steuereinheit 35 zusammengefasst sein. Das ausgekoppelte Signal ist durch die Wechselwirkung mit dem Produkt in der Wechselwirkungszone 30 charakteristisch modifiziert, beispielsweise in Form einer Verschiebung der Resonanzfrequenz und einer Änderung der Breite der Resonanzkurve. Auch die Präsenz von Fremdkörpern, insbesondere einer festen Fremdsubstanz, in dem Produkt lässt sich aus dem ausgekoppelten Signal ableiten.

Nach einem bevorzugten Messverfahren wird die Messfrequenz im Bereich der Messresonanz verfahren, um zwei unabhängige Messparameter, beispielsweise die Breite der Messresonanz und die Resonanzfrequenz ermitteln zu können. Zu diesem Zweck ist die Steuereinrichtung 22 vorzugsweise entsprechend programmiert. Steuereinrichtung 22 und Auswerteeinrichtung 34 können von einem Computer gebildet sein. Die Bestimmung zweier unabhängiger Parameter gestattet beispielsweise die Ermittlung der Produktfeuchte unabhängig von der Produktdichte, und/oder der Produktdichte unabhängig von der Produktfeuchte.

Das Ausführungsbeispiel gemäß Fig. 3 betrifft einen offenen Rechteck-Resonatorhohlraum 12, in dem sich beispielsweise ein der H₁₀₁-Resonanz eines vollständig geschlossenen rechteckigen Hohlraumresonators entsprechendes Feld ausbildet. Der Resonatorhohlraum 12 ist so geöffnet, dass über die Trennstelle allenfalls geringe Wandströme fließen. Die sich ergebende spaltförmige Öffnung 39 kann zur Probenzuführung verwendet werden, insbesondere eines flächigen, beispielsweise bahnförmigen Produkts, aber auch eines oder mehrerer Produktstränge. Zur Verhinderung von Abstrahlungsverlusten ist die spaltförmige Öffnung 39 mit einer außen leerlaufenden Parallelplattenanordnung 40 ("choke") versehen, deren radiale Länge eine Viertelwellenlänge beträgt und die an der Trennstelle als virtueller Kurzschluss wirkt.

Das Ausführungsbeispiel gemäß Fig. 3 verdeutlicht, dass der Applikator 10 keine separaten Anschlüsse 44, 45 bzw. Koppeleinrichtungen 26, 31 für die Leitungen 18, 32 zum Zu- bzw. Ableiten der Mikrowellen aufweisen muss. Die Mikrowellen werden in diesem Beispiel in die Resonatorkoaxialkabel 21, 37 eingespeist, beispielsweise unter Verwendung von T-Stücken 41, 42. Der Mikrowellenresonator wird in diesem Beispiel von dem Resonatorhohlraum 12 und den Resonatorkoaxialkabeln 21, 37 und 43 gebildet.

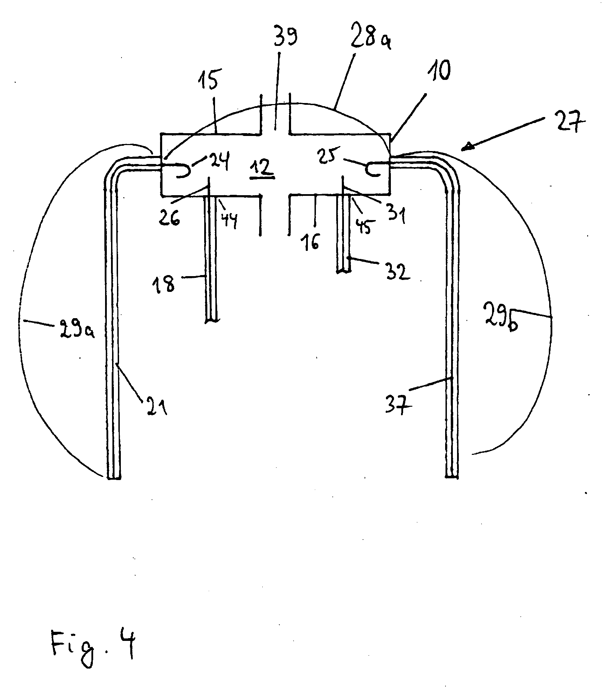

In der Ausführungsform gemäß Fig. 4 sind die Resonatorkoaxialkabel 21 und 37 nicht miteinander verbunden. Der Resonator 27 ist demnach kein Ringresonator, sondern ein linearer Resonator. Die Länge der Resonatorkoaxialkabel 21, 37 und die Abmessungen des Resonatorhohlraums sind so abgestimmt, dass sich über den Resonator 27 eine ungerade Zahl von Halbwellen des elektrischen Feldes, im vorliegenden Beispiel drei Halbwellen 28a, 29a, 29b ausbreiten. Diese Ausführungsform ist insbesondere vorteilhaft, wenn ein Ringschluss der Resonatorkoaxialkabel 21, 37 beispielsweise aufgrund ausgedehnter, insbesondere flächiger, Proben nicht erreicht werden kann.

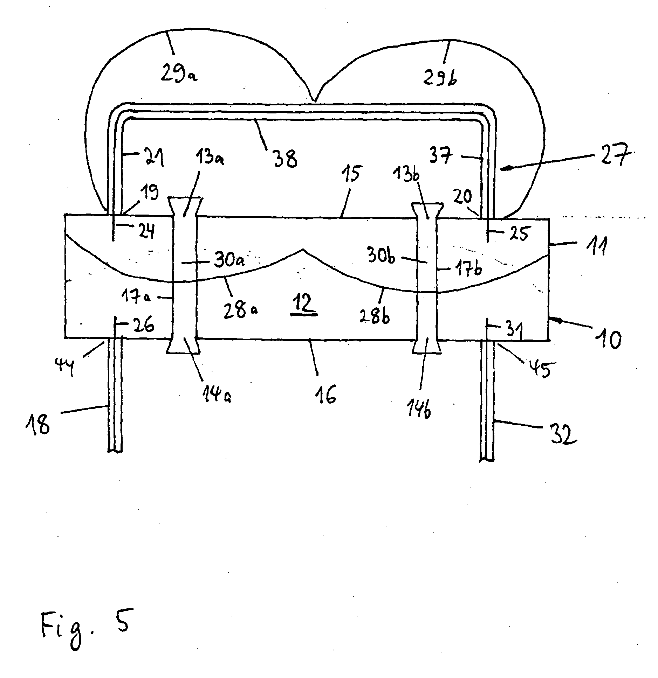

In der Ausführungsform gemäß Fig. 5 breiten sich eine Mehrzahl von Halbwellen des elektrischen Feldes, im vorliegenden Beispiel zwei Halbwellen 28a, 28b, in dem vorzugsweise- rechteckigen Resonatorhohlraum 12 aus. Es sind Probenzuführungsmittel 13a, 14a, 17a und 13b, 14b, 17b für separate Probenzuführung in beide Halbwellen im Bereich des Intensitätsmaximums vorgesehen. Ein solcher Applikator 10 kann beispielsweise bei einer Zweistrangmaschine, allgemeiner bei einer Mehrstrangmaschine verwendet werden. Insgesamt breitet sich zweckmäßigerweise eine gerade Anzahl von Halbwellen in dem Resonator 27 aus. Im vorliegenden Beispiel breiten sich zwei Halbwellen 29a, 29b in dem Resonatorkoaxialkabel 38 und insgesamt vier Halbwellen 28a, 28b, 29a, 29b in dem Resonator 27 aus.

Der Resonatorhohlraum 12 ist in den Ausführungsformen gemäß Fig. 1 bis 5 im wesentlichen frei von dielektrischem Material, d.h. der Resonatorhohlraum 12 ist luftgefüllt. Dies ist vorteilhaft, da ein zusätzliches dielektrisches Material eine zusätzliche Temperaturabhängigkeit mit sich bringt, die sich negativ auf das Messergebnis auswirken kann. Jedoch ist die Verwendung einer homogenen dielektrischen Füllung für den Resonatorhohlraum 12 (abgesehen von der Wechselwirkungszone 30; 30a, 30b) nicht ausgeschlossen, beispielsweise um eine Reduzierung der Abmessungen des Applikators 10 zu erreichen.

Die von dem Generator 23 erzeugte Messfrequenz liegt vorzugsweise im Bereich von 100 MHz bis 10 GHz, weiter vorzugsweise im Bereich von 1 bis 5 GHz.

## Patentansprüche

1. Mikrowellenmessvorrichtung zur Bestimmung mindestens einer Messgröße an einem Produkt mittels eines in einem Resonator (27) erzeugten resonanten elektrischen Mikrowellenfeldes, umfassend einen Mikrowellenapplikator (10) mit einem von metallischen oder metallisierten Wänden (11, 15, 16) gebildeten Resonatorhohlraum (12) und einer Öffnung (13; 39), um das zu messende Produkt in Wechselwirkung mit dem Mikrowellenfeld zu bringen, ein Resonatorkoaxialkabel (21, 37, 38, 43), das mit dem Resonatorhohlraum (12) mikrowellenleitend So verbunden ist, dass sich das resonante Mikrowellenfeld teilweise in dem Resonatorkoaxialkabel (21, 37, 38, 43) ausbildet, und eine Auswerteeinrichtung (34), die zur Bestimmung der Feuchte, Dichte, Masse und/oder einer dielektrischen Eigenschaft des Produkts und/oder zur Detektion einer Fremdsubstanz in dem Produkt aus einem von der Wechselwirkung des Produkts mit dem Mikrowellenfeld beeinflussten Mikrowellensignal eingerichtet ist, **dadurch gekennzeichnet, dass** das Resonatorkoaxialkabel (21, 37, 38, 43) und der Resonatorhohlraum (12) einen Ringresonator (27) bilden.

2. Mikrowellenmessvorrichtung nach Anspruch 1, wobei in dem Resonatorkoaxialkabel (21, 37, 38, 43) mindestens eine Halbwelle des resonanten elektrischen Mikrowellenfeldes ausgebildet ist.

3. Mikrowellenmessvorrichtung nach einem der vorangehenden Ansprüche, wobei in dem Resonator (27) mindestens zwei Halbwellen des elektrischen Feldes ausgebildet sind.

4. Mikrowellenmessvorrichtung nach einem der vorangehenden Ansprüche, wobei in dem Resonator (27) eine gerade Anzahl von Halbwellen des elektrischen Feldes ausgebildet sind.

5. Mikrowellenmessvorrichtung nach einem der vorangehenden Ansprüche, umfassend einen Generator (23) zur Erzeugung des Mikrowellenfeldes und eine Mikrowellen-Anschlussleitung (18) zum Verbinden des Generators (23) mit dem Mikrowellenapplikator (10).

6. Mikrowellenmessvorrichtung nach einem der vorangehenden Ansprüche, umfassend einen Analysator (33) zum Analysieren eines von der Wechselwirkung des Produkts mit dem Mikrowellenfeld beeinflussten Mikrowellensignals, und eine Mikrowellen-Anschlussleitung (32) zum Verbinden des Analysators (33) mit dem Mikrowellenapplikator (10).

7. Mikrowellenmessvorrichtung nach einem der vorangehenden Ansprüche, wobei die Auswerteeinrichtung (34) zur Bestimmung zweier unabhängiger, eine Resonanzkurve des Meßsignals charakterisierender Parameter eingerichtet ist.

8. Mikrowellenmessvorrichtung nach einem der vorangehenden Ansprüche, wobei der Mikrowellenapplikator (10) zum Einführen, vorzugsweise Durchführen des Produkts in den bzw. durch den Resonatorhohlraum (12) eingerichtet ist.

9. Mikrowellenmessvorrichtung nach einem der vorangehenden Ansprüche, wobei der Mikrowellenapplikator (10) zur Messung an einem strang-, stab- oder tablettenförmigen Produkt eingerichtet ist.

## Claims

1. Microwave measuring device for determining at least one measured value of a product by means of a resonant electrical microwave field generated in a resonator (27), including a microwave applicator (10) comprising a resonator cavity (12) formed by metallic or metallised walls (11, 15, 16) and an opening (13; 39) to bring the product to be measured into interaction with the microwave field, a resonator coaxial cable (21, 37, 38, 43) connected to the resonator cavity (12) to guide microwaves such that the resonant microwave field is partially formed in the resonator coaxial cable (21, 37, 38, 43), and an evaluation device (34) adapted to determine, from a microwave signal affected by the interaction of the product with the microwave field, the moisture, the density, the mass and/or a dielectric characteristic of the product and/or to detect a foreign substance in the product, **characterized in that** the resonator coaxial cable (21, 37, 38, 43) and the resonator cavity (12) form a ring resonator (27).

2. Microwave measuring device according to claim 1, wherein at least one half-wave of the resonant electrical microwave field is formed in the resonator coaxial cable (21, 37, 38, 43).

3. Microwave measuring device according to one of the preceding claims, wherein at least two half-waves of the electrical field are formed in the resonator (27).

4. Microwave measuring device according to one of the preceding claims, wherein an even number of half-waves of the electrical field is formed in the resonator (27).

5. Microwave measuring device according to one of the preceding claims, including a generator (23) for generating the microwave field, and a microwave connecting line (18) for connecting the generator (23) to the microwave applicator (10).

6. Microwave measuring device according to one of the preceding claims, including an analyzer (33) for analyzing a microwave signal affected by the interaction of the product with the microwave field, and a microwave connecting line (32) for connecting the analyzer (33) to the microwave applicator (10).

7. Microwave measuring device according to one of the preceding claims, wherein the evaluation device (34) is adapted to determine two independent parameters characterizing a resonance curve of the measuring signal.

8. Microwave measuring device according to one of the preceding claims, wherein the microwave applicator (10) is adapted to receive the product to be inserted into, preferably to be guided through the resonator cavity (12).

9. Microwave measuring device according to one of the preceding claims, wherein the microwave applicator (10) is adapted to measure a string-like, a rod-shaped or a tablet-shaped product.

## Revendications

1. Dispositif de mesure à micro-ondes pour déterminer au moins une grandeur de mesure sur un produit au moyen d'un champ résonant électrique de micro-ondes généré dans un résonateur (27), comprenant un applicateur de micro-ondes (10) ayant une cavité de résonateur (12) formée de parois métalliques ou métallisées (11, 15, 16) et une ouverture (13 ; 39) afin de mettre en interaction le produit à mesurer et le champ de micro-ondes, un câble coaxial de résonateur (21, 37, 38, 43) qui est connecté de manière conductrice de micro-ondes à ladite cavité de résonateur (12) de telle sorte que le champ résonant de micro-ondes se forme en partie dans ledit câble coaxial de résonateur (21, 37, 38, 43), ainsi qu'un dispositif d'évaluation (34) arrangé pour déterminer la moiteur, la densité, la masse et/ou une propriété diélectrique du produit et/ou pour détecter une substance étrangère dans le produit à partir d'un signal micro-ondes influencé par l'interaction du produit avec le champ de micro-ondes, **caractérisé par le fait que** ledit câble coaxial de résonateur (21, 37, 38, 43) et ladite cavité de résonateur (12) forment un résonateur annulaire (27).

2. Dispositif de mesure à micro-ondes selon la revendication 1, dans lequel au moins une demi-onde du champ résonant électrique de micro-ondes est formée dans ledit câble coaxial de résonateur (21, 37, 38, 43).

3. Dispositif de mesure à micro-ondes selon l'une quelconque des revendications précédentes, dans lequel au moins deux demi-ondes du champ électrique sont formées dans le résonateur (27).

4. Dispositif de mesure à micro-ondes selon l'une quelconque des revendications précédentes, dans lequel un nombre pair de demi-ondes du champ électrique est formé dans ledit résonateur (27).

5. Dispositif de mesure à micro-ondes selon l'une quelconque des revendications précédentes, comprenant un générateur (23) pour générer le champ de micro-ondes, ainsi qu'une ligne de jonction à micro-ondes (18) pour connecter le générateur (23) à l'applicateur de micro-ondes (10).

6. Dispositif de mesure à micro-ondes selon l'une quelconque des revendications précédentes, comprenant un analyseur (33) pour analyser un signal micro-ondes influencé par l'interaction du produit avec le champ de micro-ondes, ainsi qu'une ligne de jonction à micro-ondes (32) pour connecter ledit analyseur (33) à l'applicateur de micro-ondes (10).

7. Dispositif de mesure à micro-ondes selon l'une quelconque des revendications précédentes, dans lequel ledit dispositif d'évaluation (34) est arrangé pour déterminer deux paramètres indépendants caractérisant une courbe de résonance du signal de mesure.

8. Dispositif de mesure à micro-ondes selon l'une quelconque des revendications précédentes, dans lequel ledit applicateur de micro-ondes (10) est arrangé pour recevoir le produit à introduire dans, de préférence à passer à travers la cavité de résonateur (12).

9. Dispositif de mesure à micro-ondes selon l'une quelconque des revendications précédentes, dans lequel ledit applicateur de micro-ondes (10) est arrangé pour mesurer sur un produit en forme de gaine, de barre ou de pastille.
